# EUROPEAN PATENT APPLICATION

(11) **EP 1 083 429 A2**
(43) Date of publication of application: **14.03.2001**
(21) Application number: 00306552.1
(22) Date of filing: 01.08.2000
(51) Int. Cl.: G01P 15/08

(54) **Fiber optic micromechanical sensor with modulating shutter**

(30) Priority: 26.05.2000 US 580371; 10.09.1999 US 153404 P
(71) Applicant: Nerak SA, 2035 Corcelles (CH)
(72) Inventor: Guldimann, Benedikt, 2000 Neuchatel (CH)
(74) Representative: Spall, Christopher John

(57) **Abstract**

A fiber optic micromechanical sensor (20) for sensing or measuring acceleration, force, or displacement is disclosed. The micromechanical sensor includes a base component (22) in which all physical features of the sensor - other than the at least one optical fiber - are integrally formed. The base component includes the following integral features: a frame (28), a movable mass structure (30) attached to the frame, a shutter (36) extending from a free end of the movable mass structure, and at least one fiber optic groove (38, 40) for receiving an optical fiber. The micromechanical sensor also includes an optical fiber (24, 26) which is secured within the at least one fiber optic groove of the base component. The movable mass structure is capable of being either vertically or horizontally displaced such that the shutter extending from the mass structure is capable of influencing the light propagating from the optical fiber. In particular, the shutter is capable of either partially or wholly reflecting light propagating from the optical fiber back into the same optical fiber or partially or wholly transmitting light to and blocking light from another optical fiber secured within another fiber optic groove. The at least one optical fiber, another fiber, or a combination of fibers are used to detect the intensity of the light after it has been externally influenced and are thus used for measuring parameters such as acceleration, force, or displacement.

## Description

This application claims the benefit of U.S. Provisional Application No. 60/153,404, filed September 10, 1999, the disclosure of which is hereby expressly incorporated by reference.

### Field of the Invention

This invention relates to micromechanical sensors and, more particularly, to fiber optic micromechanical sensors utilizing shutter modulation for measuring parameters such as acceleration, force, or displacement.

### Background of the Invention

Many types of sensors for use in aerospace and military devices, among others, encounter high electromagnetic fields, high radiation levels, high temperatures, and other hostile factors. Such sensors also typically have to be small enough so that they can easily be integrated in as many different machines or structures as possible. Sensors which are able to operate in these conditions are usually based on optical methods.

Optical sensors for measuring, for example, acceleration, force, or displacement typically operate by monitoring the intensity of light collected at one or more photodetectors after it has been influenced in some way. The main advantage of such intensity modulated sensing devices is the simplicity of the principal by which acceleration, force, or displacement is determined, in addition to the fact that no high spectral quality light sources are required in such devices. Thus, theoretically, low spectral quality light sources such as a simple light emitting diode (LED) source can be used in these devices.

Many devices utilizing opto-mechanical sensing principals for detecting acceleration, force, or displacement based on intensity modulation techniques are known in the art. Such sensing devices are primarily made using mechanical microstructures with either optical fibers or integrated optical waveguides. These intensity modulation-based sensing devices can be separated into two categories. The first contains sensors whose response depends on a fiber or a waveguide being bent or displaced, while the second contains those devices whose response is determined by a movable microstructure.

The first category of intensity modulation-based sensors, where a fiber or waveguide bends, often has the disadvantage that the acceleration, force, or displacement direction (depending on the type of sensor) is undetermined in addition to a lack of sensitivity. In this category, the acceleration, force, or displacement direction can only be determined by using one input fiber or waveguide and two output fibers or waveguides. However, using one input fiber and two output fibers is disadvantageous because the lateral distance between the two output fiber cores, and thus the device's detection range, is usually over 100 microns. As a result, the sensitivity of the device is much lower. Another disadvantage is the fact that the fiber would have to be bent along with the microstructure to which it is secured, and the response will depend on how the fiber is glued on the microstructure. On the other hand, a device using an integrated single mode input waveguide, a multimode interference coupler, and two close output waveguides can provide a detection range below 10 microns, *i.e*., better sensitivity. However, using such an integrated optical waveguide sensing device is disadvantageous for other reasons. In particular, it requires at least two additional processing steps than fiber based sensors. First, at least one light guiding layer must be deposited and, second, the layer must be patterned so as to shape the waveguide.

In the second category where the fiber or waveguide is nonbending, a microstructure is deformed under acceleration and influences the light beam coming out of an input fiber or waveguide. As an example of one such sensing device, the measurement of, for example, acceleration, force, or displacement can be based on a mirror reflecting light from an optical fiber back into the same optical fiber. In particular, this sensing device includes a mirror which is attached to a fixed microstructure. A proof mass attached to a cantilever beam is positioned between the mirror and the fiber. When the cantilever beam, and thus the proof mass, is displaced, the mirror deflects a part of the light depending upon the force applied to the cantilever beam. One of the advantages of this device is that the acceleration, force, or displacement direction is known. However, the mirror is not micromachined and has to be separately bonded on the fixed microstructure. Furthermore, the cantilever beam in this device also had to be separately bonded to the fixed microstructure.

Intensity modulated sensing devices of the prior art thus have any one or more of the following drawbacks: they are not very sensitive; they do not detect the acceleration, force, or displacement direction; they require additional processing steps, particularly integrated optical waveguide sensing devices; or they require components that need to be bonded to conventionally fabricated structures.

Therefore, a need exists for an intensity modulated sensing device for measuring parameters such as acceleration, force, or displacement that addresses these drawbacks.

### Summary of the Invention

The present invention is a highly sensitive shutter-modulated fiber optic sensor that measures parameters such as acceleration, force, or displacement and that is fabricated entirely on a single chip with the exception of the optical fibers.

The micromechanical sensor includes a base component which includes the following integral features: a frame, a moveable mass structure attached to the frame, a shutter extending from a free end of the moveable mass structure, and at least one fiber optic groove for receiving an optical fiber. The micromechanical sensor also includes an optical fiber which is secured within the at least one fiber optic groove of the base component. The shutter at the free end of the movable mass structure is positioned relative to the optical fiber such that it is capable of influencing light output from the optical fiber when the movable mass structure and shutter are displaced.

Depending upon how the mass structure is attached to the frame, the mass structure and shutter extending therefrom can be displaced either vertically or horizontally displaced relative to the frame. In general, the mass structure is attached to the frame by at least one support beam integrally formed in the base component. For vertical displacement, the end of mass structure opposing its free end (from which the shutter extends) is attached to the frame by at least one support beam, but preferably two side-by-side support beams. For horizontal displacement, opposing sides of the mass structure are each attached to the frame by at least one support beam, but preferably two side-by-side support beams.

In either the case of vertical or horizontal displacement, the shutter is capable of either partially or wholly reflecting light propagating from the optical fiber back into the same optical fiber or partially or wholly transmitting light to and blocking light from another optical fiber secured within another fiber optic groove. In particular, in one embodiment, an input optical fiber, preferably multimode, in a first groove is pointing on the shutter. A part of the light beam coming out of this fiber is blocked by the shutter, and the other part is coupled into an output optical fiber which is in a second groove which in the upper surface of the frame. The first and second grooves and, thus, the input and output optical fibers are in coaxial alignment and the shutter is either vertically or horizontally displaceable between oppositely disposed end faces of the input and output optical fibers. The output optical fiber is adapted to detect the intensity of received light to determine the deflection of the mass structure and, thus, to measure parameters such as acceleration, force, or displacement. In accordance with other aspects of this embodiment of the present invention, the shutter blocks half of the light output from the input optical fiber and permits half of the to be received by the second optical fiber when the shutter is in a quiescent state.

In accordance with still other aspects of the two-fiber embodiment, the shutter is coated with a reflective coating. In this embodiment, the shutter is capable of permitting light output from the input optical fiber to be transmitted to the output optical fiber and reflecting light output from the input optical fiber back to the input optical fiber. Thus, both the input and output optical fibers are adapted to detect the intensity of received light to determine deflection of the mass structure and to, thus, measure parameters such as acceleration, force, or displacement.

In accordance with another embodiment, a single optical fiber and groove can be used. In this case, the shutter is coated with a reflective coating and is, thus, capable of reflecting a part of the light output from the single optical fiber back into the same fiber. In this instance, the reflected light propagating back from the shutter and into the optical fiber is used to determine deflection, either horizontally or vertically, of the mass structure and, thus, to measure parameters such as acceleration, force, or displacement.

In still yet another embodiment, an input optical fiber and two output optical fibers and appropriately positioned grooves are used. In this case, the input optical fiber and a first output optical fiber are in grooves which are in coaxial alignment in the upper surface of the frame. The second output optical fiber is in a groove in the upper surface of the frame which is positioned perpendicular to the axially aligned first and second grooves such that an end face of the second output optical fiber is adjacent to the oppositely disposed end faces of the input and first output optical fibers. Again, the shutter is either vertically or horizontally displaceable between the oppositely disposed end faces of the input and first output optical fibers. In this embodiment, the shutter is coated with a reflective coating and has an angled face adjacent to the end face of the input optical fiber such that the angled face of the shutter is capable of reflecting a portion of the light that propagates outwardly from the end face of the first optical fiber to the third optical fiber while simultaneously transmitting a portion of the light to the second optical fiber and reflecting a portion of the light back to the first optical fiber.

In still yet another further embodiment, for the horizontal displacement case, the base component further includes the following additional integral features: a second shutter extending from another free end of the mass structure and oppositely disposed from the first shutter; first and second axially aligned grooves between which the first shutter is horizontally displaceable; and third and fourth axially aligned grooves between which the second shutter is horizontally displaceable. In each of the four grooves an optical fiber is secured. The optical fibers in the second and fourth optical grooves are adapted to measure the intensity of light transmitted from the optical fibers in the first and third grooves in order to detect the horizontal displacement of the mass structure.

For any of the above-described fiber arrangements, in accordance with further aspects of the present invention, the frame, mass structure, shutter, at least one groove, and at least one support beam are micromachined into the base component.

In accordance with yet further aspects of the invention, the shutter extending from the mass structure is a vertically extending shutter. Furthermore, the vertical shutter is preferably positioned perpendicular to the longitudinal axis of the input optical fiber.

In accordance with still other further aspects of the invention, for any of the above-described embodiments, single mode or multimode fibers can be used or a combination of both. For instance, the input fiber can be single mode and the output multimode. Further, multicore and specially shaped fibers could also be used.

As will be readily appreciated from the foregoing description, by integrally forming all of the elements of the sensor excluding the at least one optical fiber in a single base component, the invention provides a simple and sensitive sensor capable of measuring acceleration, force, or displacement and the direction thereof. By using shutter modulation in which a moveable shutter is positioned very close to at least one optical fiber or between two very closely spaced apart optical fibers, the resulting sensor has a high resolution and dynamic range in addition to a high displacement sensitivity. Furthermore, not only does the invention have simple detection requirements, but it also has a broad range of applications since it can withstand very high ambient electro-magnetic fields as the device does not contain any electronics and thus electromagnetic fields cannot induce currents onto the signal.

### Brief Description of the Drawings

FIGURE 1 is a three-dimensional perspective view of a fiber optic micromechanical sensor of the present invention depicting two fiber grooves each for receiving an optical fiber and depicting a vertically displaceable shutter;
FIGURE 2 is a plan view of the fiber optic micromechanical sensor of FIGURE 1;
FIGURE 3A is a cross sectional view of the fiber optic micromechanical sensor of FIGURE 1 in its quiescent state;
FIGURE 3B is a cross sectional view of the fiber optic micromechanical sensor of FIGURE 1 with the mass structure and shutter downwardly deflected;
FIGURE 4 is a three-dimensional perspective view of an alternative embodiment of the fiber optic micromechanical sensor of FIGURE 1 depicting a single fiber groove for receiving a single optical fiber;
FIGURE 5 is a three-dimensional perspective view of another alternative embodiment of the fiber optic micromechanical sensor of FIGURE 1 depicting three fiber grooves each for receiving an optical fiber and depicting an angled shutter;
FIGURE 6 is a three-dimensional perspective view of a fiber optic micromechanical sensor in accordance with yet another alternative embodiment depicting two fiber grooves each for receiving an optical fiber and depicting a horizontally displaceable shutter;
FIGURE 7 is a plan view of the fiber optic micromechanical sensor of FIGURE 6;
FIGURE 8A is a cross sectional view of the fiber optic micromechanical sensor of FIGURE 6 in its quiescent state;
FIGURE 8B is a cross sectional view of the fiber optic micromechanical sensor of FIGURE 6 with the mass structure and shutter horizontally displaced;
FIGURE 9 is a three-dimensional perspective view of an alternative embodiment of the fiber optic micromechanical sensor of FIGURE 6 depicting a single fiber groove for receiving a single optical fiber;
FIGURE 10 is a three-dimensional perspective view of another alternative embodiment of the fiber optic micromechanical sensor of FIGURE 6 depicting three fiber grooves each for receiving an optical fiber and depicting an angled shutter;
FIGURE 11 is a three-dimensional perspective view of a fiber optic micromechanical sensor in accordance with still yet another alternative embodiment depicting two oppositely disposed shutters, each positioned between a set of oppositely disposed optical fibers; and
FIGURES 12A-J are partial side views depicting the fabrication process of the base component of the sensor in which the frame, mass structure, shutter, and fiber optic grooves are integrally formed.

### Detailed Description of the Preferred Embodiment

The present invention is a shutter modulated fiber optic based sensor that can be used as an accelerometer or used in other applications in which force or displacement are sensed or measured. For ease of reference, the following discussing focuses on the application of the sensor as an accelerometer. However, it will be appreciated by those skilled in the art and others that the embodiments disclosed herein are equally applicable to measuring other parameters such as force or displacement.

As will be described in further detail below, the main component of the invention is a base in which all physical features of the sensor--other than at least one optical fiber--are integrally formed. The base includes the following integral features: a frame, at least one fiber optic groove for receiving an optical fiber, a moveable mass structure attached to the frame, and a vertical shutter extending from a free end of the moveable mass structure. The vertical shutter and the moveable mass structure to which it is attached are positioned relative to the at least one fiber optic groove such that light from an end face of an optical fiber secured within the fiber optic groove is capable of being influenced by the shutter. In particular, when the moveable mass and, thus, the vertically extending shutter are displaced, the light from the at least one optical fiber is either partially or wholly blocked, reflected (if the shutter is coated with a reflective coating), or transmitted due to the positioning of the shutter in front of the end face of the optical fiber. The optical fiber, alone or in combination with other optical fibers (which, if used, are secured within additional fiber optic grooves integrally formed in the base), is used to detect the intensity of the light after it has been externally influenced and provides the means by which detected signals can travel to a more secure place where an opto-electronic system processes them.

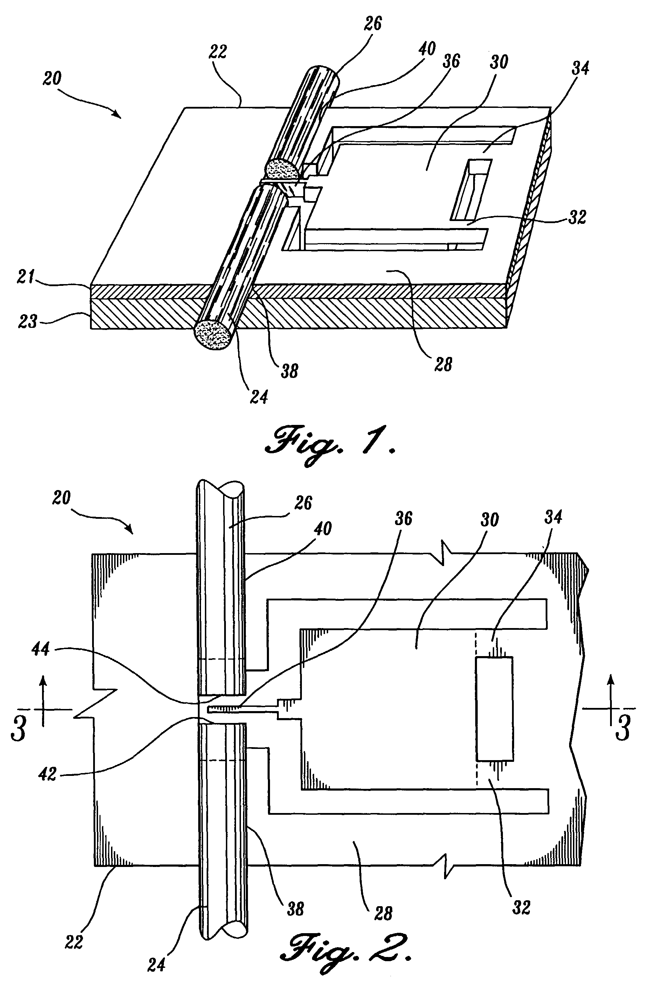

FIGURE 1 illustrates a first embodiment of a fiber optic micromechanical sensor 20 of the present invention. The sensor 20 is an intensity modulated accelerometer which comprises a base 22, an input optical fiber 24, and an output optical fiber 26. The base 22 includes several integral components including a frame 28, a mass structure 30 attached at one end to the frame via side-by-side support beams 32 and 34, a shutter 36 attached to the free end of the mass structure 30 opposite the support beams 32 and 34, and grooves 38 and 40 for receiving the optical fibers 24 and 26 respectively.

The grooves 38 and 40 are sized and shaped to receive the input optical fiber 24 and the output optical fiber 26, respectively, and thus are formed in an upper surface 21 of the base 22. As best shown in FIGURE 2, which is a plan view of the sensor 20, the grooves 38 and 40, and hence the optical fibers 24 and 26, are in axial alignment with one another. The optical fibers 24 and 26 are preferably secured within the grooves 38 and 40 via an ultraviolet epoxy resin. However, it will be appreciated by those skilled in the art and others that the optical fibers 24 and 26 can be secured with the grooves 38 and 40 via any number of ways such as micromachined clamps or squeezing the fibers from the top.

As also best shown in FIGURE 2, the mass structure 30 extends from the frame via the support beams 32 and 34 such that the vertically extending shutter 36 on the mass structure's free end is positioned between adjacent ends 42 and 44 of the optical fibers 24 and 26, respectively. Preferably, the distance between ends 42 and 44 of the optical fibers 24 and 26 is as small as possible in order to reduce coupling losses. To reduce the distance between the fibers 24 and 26, the shutter 36 should take as little space as possible. Thus, the optimal condition is positioning the vertical shutter 36 perpendicular to the axis of the optical fibers and fiber optic grooves 38 and 40 as shown in FIGURE 2. Furthermore, the thickness of the shutter is preferably a few microns. However, as will be described in further detail below, other orientations for the vertical shutter 36 are also useful as long as the shutter prevents a portion of the light from being coupled into the output fiber. For example, the vertical shutter 36 could be oriented at an 85 degree angle relative to the axis of the optical fibers and fiber optic grooves. In one embodiment, the distance between the end face 42 of input optical fiber 24 and the shutter 36 is 10 microns while the distance between the shutter 36 and the end face 44 of the output optical fiber 26 is 5 microns.

Preferably, a thin layer of gold is deposited on the surface of the vertical shutter 36 by means of electron beam evaporation so that the shutter is capable of acting as a mirror in this embodiment. Thus, as will be described further below, the reflective-coated shutter 36 is capable of blocking light from the input fiber to the output fiber by reflecting it. However, it will be appreciated by those skilled in the art and others that other coatings could be used to assist in blocking light from the input fiber to the output fiber. For example, other reflective coatings such as aluminum or silver coatings could be used. Alternatively, absorbing coatings, such as amorphous silicon (in the near infrared region), could be used. Even further, any coatings that would block, absorb, deflect, diffuse or prevent in any way light from reaching the output fiber 26 could be used.

FIGURE 3A illustrates a cross-sectional view of the sensor 20 in its quiescent state. Specifically, when the sensor is in a quiescent state, *i.e.*, no force is applied to the mass structure 30, the shutter 36 (or "mirror" as the shutter is preferably coated with gold as described above) extends between the ends of the two optical fibers 24 and 26 and the top edge of the mirror 36 is preferably coincident with the center of the oppositely disposed fibers 24 and 26. Thus, light provided to the input fiber 24 via a light source (not shown) and traveling outwardly from the end face of the input fiber 24 is half reflected by the mirror and the remaining half of the light passes into the output fiber 26. In this embodiment, the depth of the fiber optic grooves in the upper surface of the frame is preferably equivalent to half the diameter of the optical fibers. As further shown in FIGURE 3A by arrows 50, the mass structure 30 is vertically displaceable.

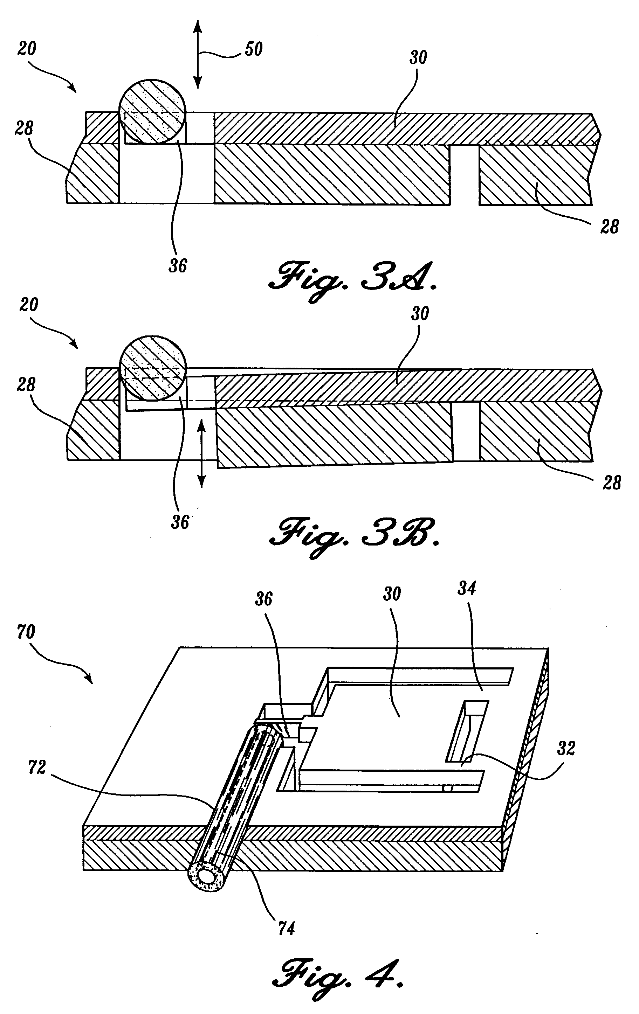

FIGURE 3B illustrates a cross-sectional view of the sensor 20 depicting the mass structure 30 vertically displaced. When a force is applied to the mass structure 30, the beam is deflected (downwardly in FIGURE 3B) allowing more light to pass from the input fiber 24 to the output fiber 26 and less light when there is an upward deflection. The amount of light that reaches the end face 44 of the output fiber 26 is proportional to the deflection of the mass 30, and hence the applied force, and has a linear deflection detection range. To calculate the applied force, the output optical fiber 26 is attached to an optoelectrical processing system (not shown). Thus, the sensor 20 produces an intensity modulated light beam that represents the force applied to the mass structure 30.

In the above-described embodiment particularly where the distance between the input fiber and shutter is 10 microns and the distance between the shutter and output fiber is 5 microns, the sensor can achieve a displacement resolution below 2.5 nm and a linear displacement range of 5 microns for input and output fibers having a core diameter of 50 microns.

Alternatively, it will be appreciated by those skilled in the art and others that when in the quiescent state, the reflective-coated shutter 36 can extend completely between the optical fibers 24 and 26 such that light traveling outwardly from the end face of the input fiber 24 is reflected by the mirror 36 and none of the light passes into the output fiber 26. In this embodiment, the depth of the fiber optic grooves is preferably equivalent to the diameter of the optical fibers. When a force is applied to the mass structure 30, the mass is deflected allowing light to pass from the input fiber 24 to the output fiber 26. The amount of light that reaches the end face of the output fiber 26 is proportional to the deflection of the mass 30, and hence the applied force. It will also be appreciated by those skilled in the art and others that the position of the shutter 36 relative to the optical fibers 24 and 26 can vary in its quiescent state and the sensor 20 can be calibrated accordingly to determine the deflection of the mass structure 30 and hence the applied force.

In either of the above-described quiescent states, the sensor 20 depicted in FIGURES 1-3 can alternatively operate in a differential mode by sensing both the intensity of the light that is coupled from the input fiber to the output fiber and the intensity of the light that propagates back along the input optical fiber as a result of reflection from the reflective-coated shutter 36. In this case, the proportion between the reflected and transmitted light depends on the force applied to the mass structure. This embodiment also requires a fiber optic coupler. Furthermore, it will be appreciated by those skilled in the art and others that in this embodiment the shutter 36 must be coated, of course, with a reflective coating and the shutter 36 should be positioned orthogonal to the axis of the fiber optics and fiber optic grooves.

The optical fibers 24 and 26 of sensor 20 depicted in FIGURES 1-3 have two essential tasks. First, each optical fiber acts as a "wire" for the signal and, second, each is a part of the sensor itself. The diameter of the optical fibers determines the measurement range of the sensor 20. For example, for optical fibers having a diameter of 50 microns, the linear measurement range of the sensor 20 is approximately 5 microns. Optical fibers with higher or lower diameters can also be used. Generally, single mode and multimode fibers can be used alone or in combination. The input fiber can be single mode and the output fiber multimode for instance. Further, multicore and specially shaped fibers could also be used. Most generally, any fiber can be used.

In addition, it will be further appreciated by those skilled in the art and others that although FIGURE 1 depicts the use of two support beams, the mass structure 30 can be attached to the frame 28 via any number of support beams, *i.e*., one or more. The at least one support beam should simply be sized and shaped to permit, in this embodiment, the vertical displacement of the mass structure.

By way of a nonlimiting example, FIGURE 4 illustrates an alternative embodiment of the fiber optic micromechanical sensor described in FIGURES 1-3. It will be appreciated by those skilled in the art and others that the alternative embodiment of the fiber optic micromechanical sensor is identical to the fiber optic micromechanical sensor 20 described in FIGURES 1-3 with one exception. The alternative fiber optic micromechanical sensor 70 includes only a single groove 72 for receiving an optical fiber 74 which functions as both the input and output fiber. Essentially, the sensor 70 eliminates the output optical fiber 26 of FIGURES 1-3 and its corresponding groove 40. In this embodiment, the single optical fiber 74 directs light toward the reflective-coated shutter 36 and deflection of the mass structure 30 is determined by the intensity of the reflected light that propagates back along the single fiber 26. Since the determination of the deflection of the mass structure is based upon the measurement of the intensity of reflected light, the shutter 36 in this embodiment must be coated with a reflective coating, not just a coating that will simply block light. A fiber optic coupler is also needed in this embodiment so that it can take a part of the back-propagating light and couple it into another fiber which has a detector attached to it. Furthermore, similar to the embodiment described in FIGURES 1-3, the air gap between the shutter 36 and the single optical fiber 74 should be as small as possible.

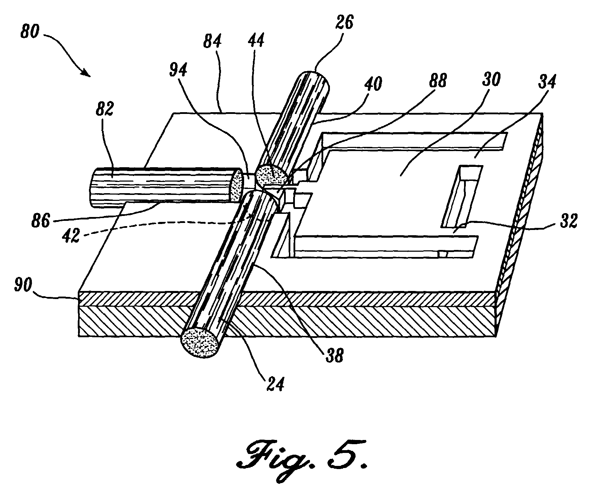

FIGURE 5 illustrates yet another alternative embodiment of the fiber optic micromechanical sensor described in FIGURES 1-3. It will be appreciated by those skilled in the art and others that this alternative embodiment is identical to the fiber optic micromechanical sensor 20 described in FIGURES 1-3 with two main exceptions. The alternative fiber optic micromechanical sensor 80 includes an additional output optical fiber 82 and an alternative base 84 integrally including an additional fiber optic groove 86 for receiving the additional output optical fiber 82 and an angled vertical mirror 88 (*i.e*., an angled and reflective-coated, vertical shutter).

The additional fiber optic groove 86 is positioned perpendicular to the aligned fiber optic grooves 38 and 40 in an upper surface 90 of the base 84. Furthermore, when the additional output optical fiber 82 is secured within the groove 86, an end face 94 of the output optical fiber 82 is perpendicular and adjacent to end faces 42 and 44 of the input optical fiber 24 and the output optical fiber 26. The angled vertical mirror 88 is positioned between the closely spaced apart end faces 42 and 44 and is integrally formed in the base 84 at an angle to the aligned axial centerlines of the input fiber 24 and the first output fiber 26 so as to reflect a portion of the light beam that propagates outwardly from the end face 42 of the input optical fiber 24 to the second output optical fiber 82 while simultaneously blocking a portion of the light that is coupled from the input fiber 24 to the first output optical fiber 26. In this embodiment, the vertical mirror 88 has an angle of 45° to the aligned axial centerlines of the input fiber 24 and the first output optical fiber 26. Preferably, the vertical mirror 88 has a front face having an angle of 45° relative to the axial centerline of the input fiber 24 as best illustrated in FIGURE 5. Thus, as described above, one part of the light beam from the input fiber 24 is deflected to the second output fiber 82, which is 90° to the input fiber, and the other part is transmitted to the first output fiber 26. The intensity of both the light transmitted to the first output fiber 26 and the light reflected to the second output fiber 82 is used to determine the deflection of the mass structure.

It will be appreciated by those skilled in the art and others that many angles of orientation of the angled vertical mirror 88, *i.e*., the reflective-coated vertically extending shutter, with respect to the axis of the input fiber 24 and first output fiber 26 may be used. Furthermore, instead of coating the vertically extending shutter with a reflective coating in the embodiment described above with reference to FIGURE 5, the shutter can include diffractive or refractive vertical structures, such as sawteeth, on one side or both sides. Most generally, the shutter can be reflective, refractive, diffractive, deflecting, diffusing, blocking, absorbing or hybrid. As an example of a hybrid shutter, the shutter could include a diffractive microstructure on one side and a refractive microstructure on the other.

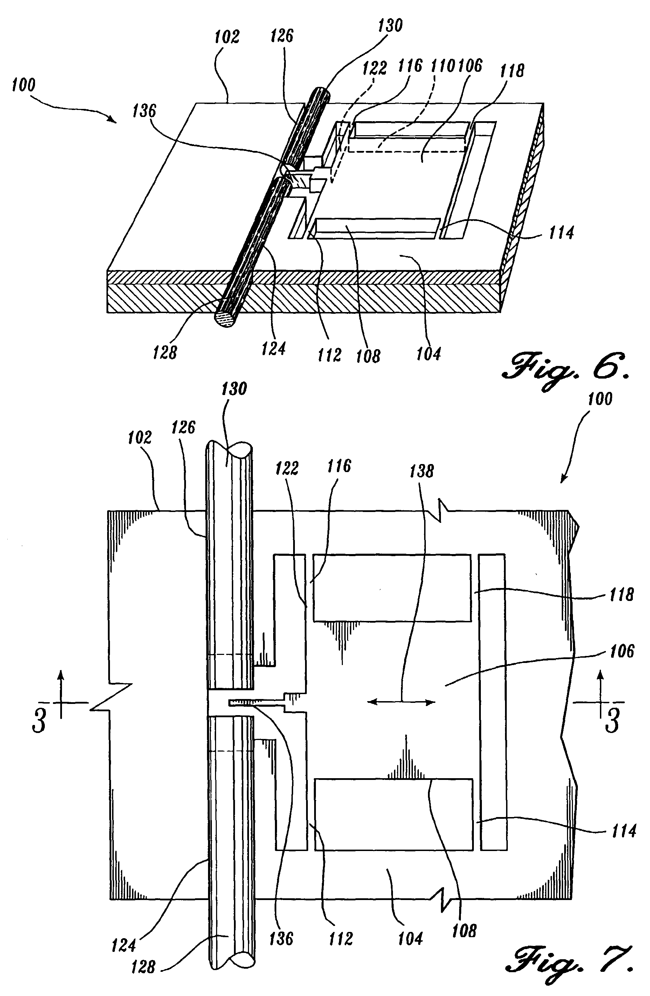

In each of the embodiments described above in reference to FIGURES 1-5, the base of the sensor generally includes an integrally formed shutter that can be vertically displaced relative to the end face of the input optical fiber. For each of these embodiments (*i.e*., for each of the above-described optical fiber and fiber optic groove arrangements), the base of the sensor can be altered such that it includes a shutter that can be horizontally displaced relative to the end face of the input optical fiber. Such alternative embodiments will be described below with reference to FIGURES 6-10.

FIGURE 6 illustrates a fiber optic micromechanical sensor 100 in accordance with another embodiment of the invention. It will be appreciated by those skilled in the art and others that this alternative embodiment is identical to the sensor 20 described in FIGURES 1-3 with three main exceptions. First, the vertically extending shutter is horizontally, rather than vertically, displaceable relative to the end face of the input optical fiber. Second, in order to provide such horizontal movement, the base of the sensor 100 is altered so that the mass will move in a horizontal direction. This is accomplished by changing the location of the support beams. In particular, instead of having a mass structure which is attached at one end to the frame via at least one support beam, the sensor 100 includes a mass structure 106 attached to a frame 104 at two opposite sides 108 and 110 of the mass structure 106 via support beams 112, 114, 116, and 118. Finally, the fiber optic grooves 124 and 126 are deeper than the fiber optic grooves shown in any of FIGURES 1-5. In particular, the depth of the fiber optic grooves 124 and 126 is equivalent to the diameter of the optical fibers 128 and 130 so that the optical fibers 128 and 130 fully rest within the grooves.

As will be appreciated by those skilled in the art and others each of the sides 108 and 110 of the mass component includes at least one support beam. Preferably, as shown in FIGURE 6, each of the sides 108 and 110 include two support beams. The support beams 112, 114, 116, and 118 are sized and shaped to permit the mass structure to be displaced horizontally and not vertically. In particular, the mechanical stiffness of the beams must be lower in the direction of detection than compared to any other direction. It will be further appreciated by those skilled in the art and others that any number of support beams can be used so long as they are positioned such that mass structure primarily moves horizontally. As best shown in FIGURE 7 which is a plan view of the sensor 100 of FIGURE 6, a shutter 136 vertically extends from an end 122 of the mass structure 106 and both the shutter 136 and mass structure 106 can be displaced horizontally relative to the end faces of the optical fibers 128 and 130 as depicted by arrows 138.

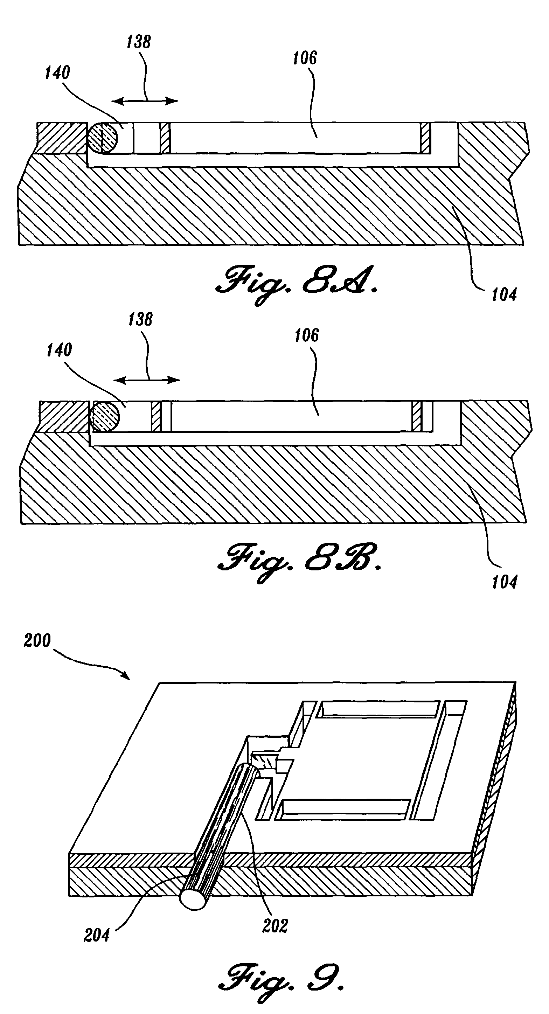

FIGURE 8A illustrates a cross-sectional view of the sensor 100 in its quiescent state. Specifically, when the sensor 100 is in a quiescent state, *i.e*., no force is applied to the mass structure 106, the shutter 136 extends between the ends of the two optical fibers 128 and 130 and a free side edge 140 (best shown in FIGURE 7) of the shutter 136 is preferably coincident with the center of the oppositely disposed fibers 128 and 130. Thus, light provided to the input fiber 128 via a light source (not shown) and traveling outwardly from the end face of the input fiber 128 is half blocked by the shutter 136 and the remaining half of the light passes into the output fiber 130. As shown by arrows 142 in FIGURE 8A, the mass structure 106 and shutter 136 are horizontally displaceable.

FIGURE 8B illustrates a cross-sectional view of the sensor 100 depicting the mass structure 106 horizontally displaced. When a force is applied to the mass structure 106, the mass structure 106 is deflected allowing more or less light to pass from the input fiber 128 to the output fiber 130. FIGURE 8B depicts the case where the mass is deflected horizontally such that less light passes from the input fiber 128 to the output fiber 130. Similar to the principle described above, the amount of light that reaches the end face of the output fiber 130 is proportional to the deflection of the mass structure 106, and hence the applied force, and has a linear deflection detection range.

Similar to the embodiment shown in FIGURE 4 for the vertical displacement cases, FIGURE 9 illustrates an alternative embodiment of the fiber optic micromechanical sensor 100 described in FIGURES 6-8. It will be appreciated by those skilled in the art and others that the alternative embodiment of the fiber optic micromechanical sensor is identical to the fiber optic micromechanical sensor 100 described in FIGURES 6-8 with one exception. The alternative fiber optic micromechanical sensor 200 includes only a single groove 202 for receiving an optical fiber 204 which functions as both the input and output fiber. Essentially, the sensor 200 eliminates the output optical fiber 130 of FIGURES 6-8 and its corresponding groove 126. In this embodiment, the single optical fiber 204 directs light toward the shutter 136 and deflection of the mass structure 106 is determined by the intensity of the reflected light that propagates back along the single fiber 204.

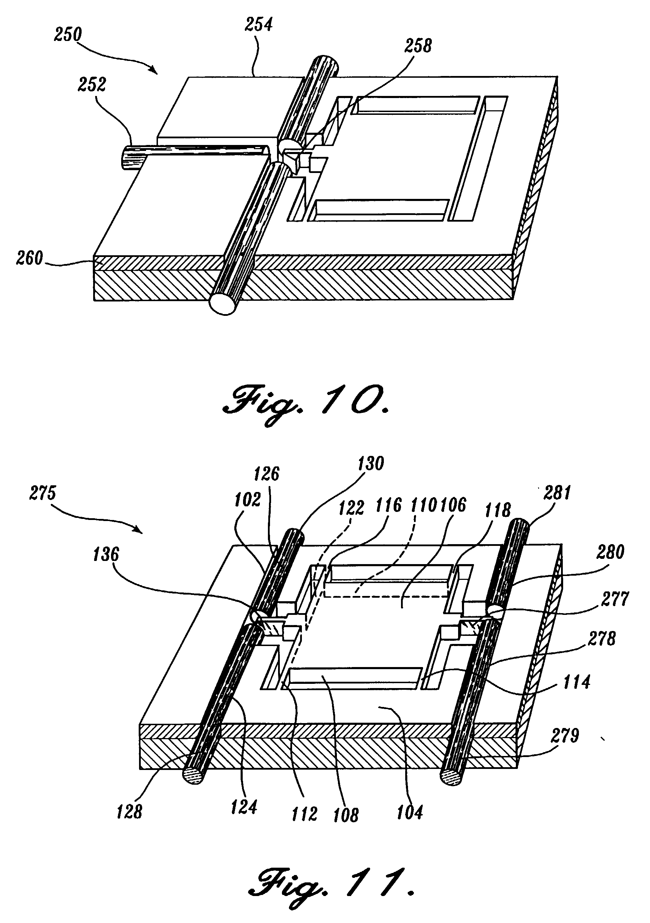

FIGURE 10 illustrates another alternative embodiment of the fiber optic micromechanical sensor 100 described in FIGURES 6-8. It will be appreciated by those skilled in the art and others that this alternative embodiment is identical to the fiber optic micromechanical sensor 100 described in FIGURES 6-8 with two main exceptions. The alternative fiber optic micromechanical sensor 250 includes an additional output optical fiber 252 and an alternative base 254 integrally including an additional fiber optic groove 256 for receiving the additional output optical fiber 252 and an angled vertical mirror 258 (*i.*e., an angled and reflective-coated, vertical shutter).

Similar to the two output fiber, vertical displacement embodiment depicted in FIGURE 5, the additional fiber optic groove 256 is positioned perpendicular to the aligned fiber optic grooves 124 and 126 in an upper surface 260 of the base 254. Furthermore, when the additional output optical fiber 254 is secured within the groove 256, an end face of the output optical fiber 252 is perpendicular and adjacent to the end faces of the input optical fiber 128 and the first output optical fiber 130. The angled vertical mirror 258 is positioned between the closely spaced apart end faces of the input optical fiber 128 and the first output optical fiber 130 and is integrally formed in the base 254 at an angle to the aligned axial centerlines of the input fiber 128 and the first output fiber 130 so as to reflect a portion of the light beam that propagates outwardly from the end face 42 of the input optical fiber 128 to the second output optical fiber 252 while simultaneously blocking a portion of the light that is coupled from the input fiber 128 to the first output fiber 130. Again, as in the embodiment described with respect to FIGURE 5, the intensity of both the light transmitted to the first output fiber 130 and the light reflected to the second output fiber 252 is used to determine the deflection of the mass structure.

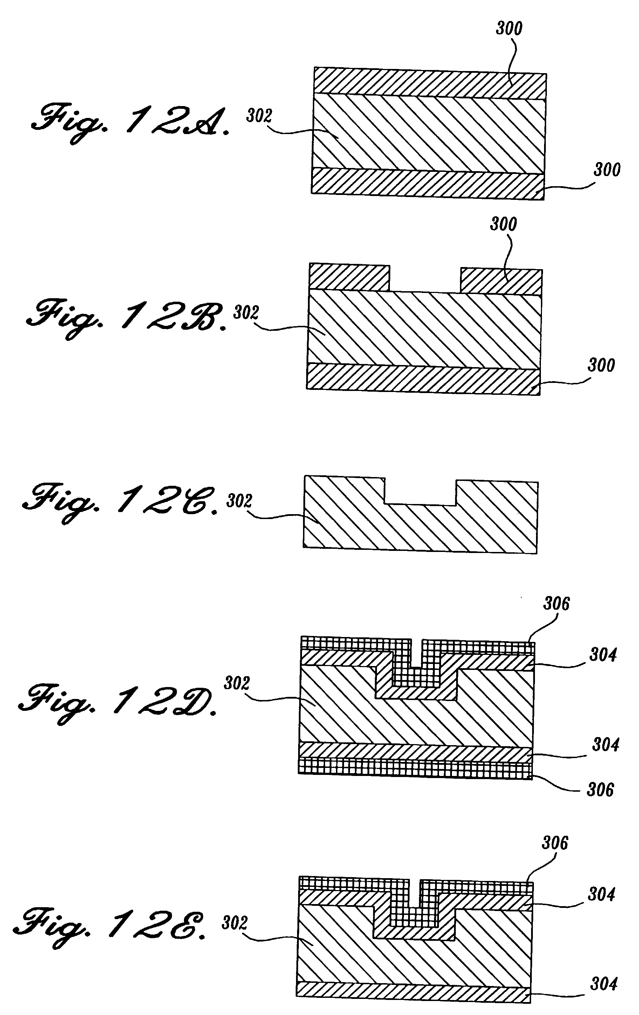

FIGURE 11 illustrates yet another alternative embodiment of the fiber optic micromechanical sensor 100 described in FIGURES 6-8. It will be appreciated by those skilled in the art and others that this alternative embodiment is identical to the fiber optic micromechanical sensor 100 described in FIGURES 6-8 with two main exceptions. First, the alternative fiber optic micromechanical sensor 275 in FIGURE 11 includes a second shutter 277 extending from another free end of the mass structure. The additional free end is opposite the first free end from which the first shutter 136 extends. The second shutter 277 is thus oppositely disposed from the first shutter 36.

Second, the alternative fiber optic micromechanical sensor 275 includes a second set of axially aligned fiber grooves and optical fibers secured therein. In particular, the sensor 275 includes a second input groove 278 and fiber 279 and a second output groove 280 and fiber 281. The second shutter 277 is horizontally displaceable between oppositely disposed and closely spaced apart end faces of the second input and output optical fibers 279 and 281. When the mass structure 106 is horizontally displaced, the first and second shutters 136 and 277 are capable of blocking a portion of light from being transmitted from the input fibers 128 and 279 to the output fibers 130 and 281. The output optical fibers 130 and 281 are together adapted to measure the intensity of light received from the input fibers to determine the deflection of the mass structure. It will be appreciated by those skilled in the art and others that the light transmitted from the input fibers 128 and 279 originates from a common source from which a fiber splitter (not shown) is used to split the light.

Similar to the fiber optic micromechanical sensor 100 shown in FIGURES 6-8, the fiber optic micromechanical sensor 275 of FIGURE 11 is designed to couple half of the light from the input fibers 128 and 279 to the output fibers 130 and 281, respectively, when in its quiescent state. As the mass 106 is displaced, for instance to the left, the coupling between the two left fibers (*i.e*., fibers 128 and 130) is decreased and more light is coupled between the optical fibers on the right side (*i.e*., fibers 279 and 281). The sensor 275 of FIGURE 11 allows a differential acceleration measurement, and acceleration detection therefore becomes insensitive to light source intensity fluctuations when the differential signal is normalized.

One fabrication process used to create any of the embodiments described in FIGURES 1-11 is illustrated in FIGURES 12A-J. This fabrication process consists of initially micromachining one surface of a silicon wafer (front surface or upper layer) followed by the micromachining of the other surface (back surface or lower layer). This process will be described in relation to the sensor of the present invention described in FIGURE 1. However, it will be appreciated by those skilled in the art and others that the following process can similarly be applied to the other embodiments.

Processing of the front surface forms the grooves for the optical fibers as well as the integrated mass structure, shutter and support beams. However, processing the front surface of the wafer to form the mass structure and shutter does not penetrate the rear surface of the wafer. During the micromachining of the back surface, the wafer is etched away to free the mass structure and shutter.

As shown in FIGURE 12A, a layer 300 of silicon dioxide is initially deposited on each surface (on the front and back surface) of a 400 micron thick, for example, silicon wafer 302. The silicon dioxide is used to form a mask that allows etching the fiber optic grooves, the mass structure and the shutter into the front surface of the wafer 302 (as partially shown in FIGURE 12B). In the process being described, the grooves for the optical fibers, the mass structure and the shutter are 77 microns deep, in this particular example, and are formed by a single deep plasma etching step. In the preferred process, a recently developed technique known as Deep Reactive Ion Etching (DRIE) is used. Once the grooves for the optical fibers, the mass structure and the shutter have been formed on the front surface, the silicon dioxide is removed from the front and back surfaces of the wafer 302 with a buffered hydrofluoric (BHF) bath (FIGURE 12C).

FIGURES 12D and E illustrate processing steps that are implemented in order to protect the structure formed in the front surface of the wafer during processing of the wafer back surface. As is indicated in FIGURE 12D, a new layer 304 of silicon dioxide (300 nanometers in the example being described) is grown on both the front and back surfaces of the wafer 302. A layer of silicon nitride 306 is then deposited on both the front and back surfaces of the wafer 302 (100 nanometers in the process being described). In the processing method currently being used, the silicon dioxide layer is grown on the wafer surfaces using conventional thermal techniques and the silicon nitride layers are deposited using a low pressure chemical vapor deposition (LPCVD) process. The silicon nitride layer on the front surface serves as a protection layer against the BHF used to remove the silicon dioxide layer on the back surface. The final step of preparing the wafer 302 for processing of the rear surface of the wafer is removal of the silicon nitride layer from the back surface of the wafer (FIGURE 12E). Preferably reactive ion etching is employed with the silicon dioxide coating on the rear surface serving as an etchant stop.

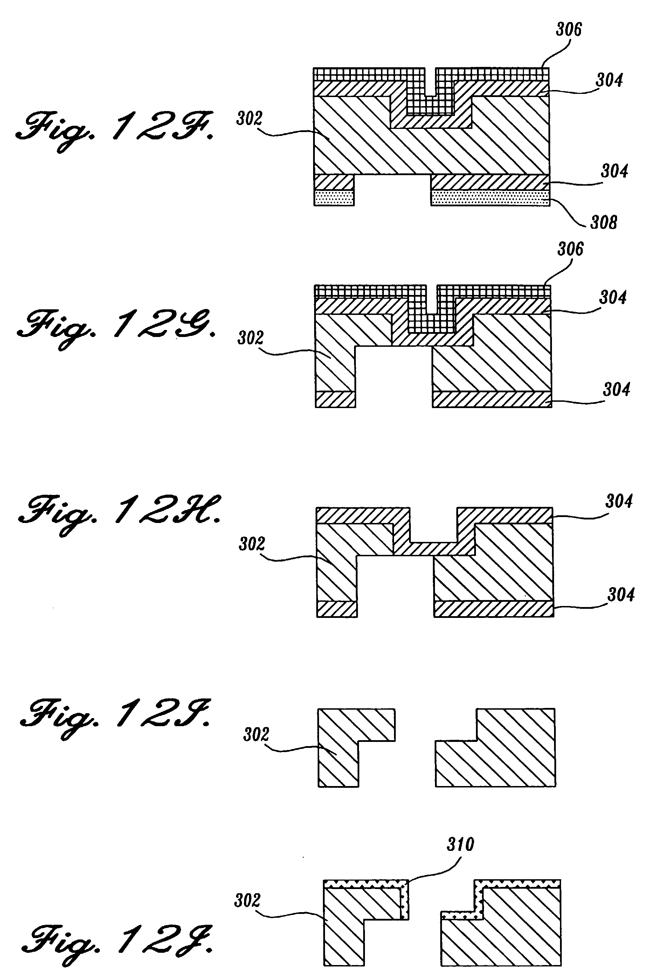

As is indicated in FIGURE 12F, the processing of the back side of the wafer begins by forming of a mask 308 that exposes the region of the wafer to be etched. In this example, the mask is a 10 micron thick layer of photoresist known as AZ 4562 and the silicon dioxide region exposed by the mask is removed in a buffered hydrofluoric bath.

Once the masking process is complete, the rear surface of the wafer is etched using a reactive ion etching process to etch partially through the wafer in order to liberate the mass structure and shutter. With respect to the example being discussed, the reactive ion etching extends 323 microns into the wafer, with the silicon dioxide layer that was earlier deposited on the front of the wafer serving as an etching stop (FIGURE 12G). Next, the silicon nitride layer that was deposited on the front surface of the wafer is removed with reactive ion etching (FIGURE 12H). The silicon dioxide layers on the front and back side of the wafer are then removed (FIGURE 12I) and the front surface is metallized using an electron beam evaporation process. In one implementation of the invention, a 10 nanometer layer of titanium is initially deposited as an adherence coating, followed by a 100 nanometer layer of gold. Titanium is preferred to other buffer materials because it does not significantly diffuse into gold. To complete the sensor, optical fibers are placed in the grooves that were formed by micromachining of the wafer front surface and are joined to the grooves with an ultraviolet sensitive epoxy.

It will be appreciated by those skilled in the art and others that standard silicon or silicon on insulator (SOI) wafers can be used in the above fabrication process. SOI wafers, in particular, can be used to overcome the well known radial inhomogenity of a deep plasma attack. However, most generally, it will be appreciated that any conventional wafer could be used to fabricate a sensor in accordance with the present invention.

By using SOI wafers, which have a buried layer of oxide between the top and bottom layers of the wafer, the above fabrication can be simplified. First, double sided photolithography with 10 microns of AZ 4562 photoresist is performed on an SOI wafer having, for example, a 61 micron thick top and 307 micron bottom silicon layer with a buried 2 micron layer of oxide in between. The vertical shutter, mass structure, support beams and fiber grooves are fabricated by Advanced Deep Reactive Ion Etching (ADRIE). Back side etching to shape the mass and to liberate the moving part of the sensor is also performed in this way. The buried oxide layer serves as a double-side etch stop. After stripping the photoresist and cleaning with piranha (concentrated H₂SO₄ : 30% H₂O₂, 50:1), the remaining buried oxide is removed in a BHF bath. As above, in some embodiments, it is then desirable to deposit a gold layer by e-beam evaporation. Finally, as before, the fibers are inserted and bonded with UV-sensitive glue.

Alternatively, to fabricate the sensor 275 shown in FIGURE 11, only a single front etching on an SOI wafer with DRIE needs to be performed, followed by a BHF-bath to liberate the moving part of the structure. In particular, photolithography with a 6 micron thick photoresist is performed on an SOI wafer having a 127 micron thick top silicon layer on a 2 micron thick buried oxide. The total wafer thickness in this embodiment is 480 microns. The support beams 112, 114, 116, and 118, the mass structure 106, the shutters 136 and 277, and fiber grooves 124, 126, 278, and 280 are fabricated by DRIE. After wafer dicing and stripping of the photoresist, the remaining buried oxide is removed in a buffered hydrofluoric acid bath. Then, a gold layer can be deposited on the shutters 136 and 277 by e-beam evaporation to improve the optical shutter quality. Finally, the fibers 128, 130, 279, and 281 are inserted and bonded with UV-sensitive glue into their corresponding grooves.

Besides the above described fabrication processes, other micromachining methods could be used to fabricate a sensor in accordance with the present invention. For example, X-ray Lithography, electrodeposition, and molding processes (LIGA) could be used. However, LIGA involves the use of polymer substrates which have a significantly lower stiffness compared to silicon substrates. It will be further appreciated by those skilled in the art and others that a micromechanical sensor of the present invention could be fabricated with a micromachined mold and, thus, sensors made with plastic substrates could be fabricated.

As will be readily appreciated by those skilled in the art and others, a fiber optic micromechanical sensor formed in accordance with this invention has a number of advantages. First, by micromachining all of the elements of the sensor excluding the at least one optical fiber on a single base structure (*i.e*., the grooves for the optical fibers, the mass structure, and the vertically extending shutter), a simple and sensitive sensor capable of measuring acceleration, force or displacement and the direction thereof is produced. Furthermore, by using shutter modulation in which a moveable shutter is positioned very close to at least one optical fiber or between two very closely spaced apart optical fibers, the resulting sensor has a high resolution and dynamic range in addition to a high displacement sensitivity. Finally, by positioning the moveable shutter normal to the axis of the at least one optical fiber and such that, in its quiescent state, it blocks half of the light beam propagating in the air gap between with shutter and the at least one optical fiber, the dynamic range and resolution of the sensor are further enhanced.

While the preferred embodiment of the invention has been illustrated and described, it will be appreciated that various changes can be made therein without departing from the spirit and scope of the invention. Thus, within the scope of the appended claims, it is to be understood that the invention can be practiced otherwise than as specifically described herein.

## Claims

1. A micromechanical sensor comprising:
a base component integrally forming:
a frame;
a movable mass structure attached to the frame;
a shutter extending from a free end of the mass structure;
at least one groove in an upper surface of the frame for receiving an optical fiber; and
an optical fiber secured within the at least one groove of the base component; wherein the shutter at the free end of the movable mass structure is capable of influencing light output from the optical fiber when the movable mass structure and shutter are displaced.

2. The micromechanical sensor of Claim 1, wherein the mass structure is attached to the frame by at least one support beam integrally formed in the base component, the at least one support beam attaching an end opposing the free end of the mass structure to the frame whereby the mass structure is capable of being vertically displaced relative to the frame.

3. The micromechanical sensor of Claim 2, wherein the frame, mass structure, shutter, at least one groove, and at least one support beam are micromachined into the base component.

4. The micromechanical sensor of Claim 2, wherein the shutter extending from the mass structure is a vertically extending shutter.

5. The micromechanical sensor of Claim 4, wherein the shutter is positioned perpendicular to the longitudinal axis of the optical fiber.

6. The micromechanical sensor of Claim 2, wherein the shutter is coated with a reflective coating and wherein the shutter is capable of reflecting light output from the optical fiber back to the optical fiber, the optical fiber adapted to measure the intensity of the reflected light to determine deflection of the movable mass structure.

7. The micromechanical sensor of Claim 6, wherein a top edge of the shutter is coincident with the center of an end face of the optical fiber when in a quiescent state whereby the shutter reflects half of the light output from the optical fiber.

8. The micro mechanical sensor of Claim 6, wherein the optical fiber is capable of measuring, based upon the deflection of the movable mass structure, one of the parameters selected from the group consisting of: acceleration, force and displacement.

9. The micromechanical sensor of Claim 2, further comprising a second groove in the upper surface of the frame and a second optical fiber secured in the second groove, wherein the first and second grooves and optical fibers are in axial alignment and the shutter is vertically displaceable between oppositely disposed end faces of the first and second optical fibers.

10. The micromechanical sensor of Claim 9, wherein the shutter is capable of permitting a portion of the light output from the first optical fiber to be transmitted to the second optical fiber and blocking the other portion of the light output from the first optical fiber, the second optical fiber adapted to detect the intensity of received light to determine deflection of the mass structure.

11. The micromechanical sensor of Claim 10, wherein the shutter, when in a quiescent state, blocks half of the light output from the first optical fiber and permits half of the light to be received by the second optical fiber.

12. The micromechanical sensor of Claim 10, wherein the second optical fiber is capable of measuring, based upon the deflection of the mass structure, one of the parameters selected from the group consisting of: acceleration, force and displacement.

13. The micromechanical sensor of Claim 9, wherein the second optical fiber is adapted to detect the intensity of light transmitted from the first optical fiber to determine the deflection of the vertically displaceable mass structure.

14. The micromechanical sensor of Claim 9, wherein the shutter is coated with a reflective coating and wherein the shutter is capable of permitting light output from the first optical fiber to be transmitted to the second optical fiber and reflecting light output from the first optical fiber back to the first optical fiber, both the first and second optical fibers adapted to detect the intensity of received light to determine deflection of the mass structure.

15. The micromechanical sensor of Claim 14, wherein a top edge of the shutter is coincident with the center of each of the oppositely opposed end faces of the first and second optical fibers when in a quiescent state, whereby the shutter reflects half of the light output from the first optical fiber.

16. The micromechanical sensor of Claim 14, wherein both the first and second optical fibers are capable of measuring, based upon the deflection of the mass structure, one of the parameters selected from the group consisting of: acceleration, force and displacement.

17. The micromechanical sensor of Claim 9 further comprising a third groove in the upper surface of the frame and a third optical fiber secured in the third groove, wherein the third groove is positioned perpendicular to the axially aligned first and second grooves and wherein an end face of the third optical fiber is adjacent to the oppositely disposed end faces of the first and second optical fibers.

18. The micromechanical sensor of Claim 17, wherein the shutter is coated with a reflective coating and includes an angled face such that the angled face of the shutter is capable of reflecting a portion of the light that propagates outwardly from the end face of the first optical fiber to the third optical fiber while simultaneously transmitting a portion of the light to the second optical fiber and reflecting a portion of the light back to the first optical fiber, both the second and third fibers adapted to detect the intensity of received light to determine deflection of the mass structure.

19. The micromechanical sensor of Claim 18, wherein a top edge of the shutter is coincident with the center of each of the oppositely opposed end faces of the first and second optical fibers when in a quiescent state, whereby the shutter transmits half of the light output from the first optical fiber to the second optical fiber.

20. The micromechanical sensor of Claim 1, wherein the mass structure is attached to the frame by at least one support beam on each of opposing sides of the mass structure whereby the mass structure is capable of being horizontally displaced relative to the frame, the at least one support beam on each of opposing sides of the mass structure being integrally formed in the base component.

21. The micromechanical sensor of Claim 20, wherein the frame, mass structure, shutter, at least one groove, and at least one support beam on each of opposing sides of the mass structure are micromachined into the base component.

22. The micromechanical sensor of Claim 20, wherein the shutter extending from the mass structure is a vertically extending shutter.

23. The micromechanical sensor of Claim 22, wherein the shutter is positioned perpendicular to the longitudinal axis of the optical fiber.

24. The micromechanical sensor of Claim 20, wherein the shutter is coated with a reflective coating and wherein the shutter is capable of reflecting light output from the optical fiber back to the optical fiber, the optical fiber adapted to sense the intensity of the reflected light to determine deflection of the horizontally displaceable mass structure.

25. The micromechanical sensor of Claim 24, wherein a top edge of the shutter is coincident with the center of an end face of the optical fiber when in a quiescent state whereby the shutter reflects half of the light output from the optical fiber.

26. The micromechanical sensor of Claim 24, wherein the optical fiber is capable of measuring, based upon the deflection of the horizontally displaceable mass structure, one of the parameters selected from the group consisting of: acceleration, force and displacement.

27. The micromechanical sensor of Claim 20 further comprising a second groove in the upper surface of the frame and a second optical fiber secured in the second groove, wherein the first and second grooves and optical fibers are in axial alignment and the shutter is horizontally displaceable between oppositely disposed end faces of the first and second optical fibers.

28. The micromechanical sensor of Claim 27, wherein the shutter is capable of permitting a portion of the light output from the first optical fiber to be transmitted to the second optical fiber and blocking the other portion of the light output from the first optical fiber, the second optical fiber adapted to detect the intensity of received light to determine deflection of the mass structure.

29. The micromechanical sensor of Claim 28, wherein the shutter, when in a quiescent state, blocks half of the light output from the first optical fiber and permits half of the light to be received by the second optical fiber.

30. The micromechanical sensor of Claim 28, wherein the second optical fiber is capable of measuring, based upon the deflection of the mass structure, one of the parameters selected from the group consisting of: acceleration, force, and displacement.

31. The micromechanical sensor of Claim 27, wherein the second optical fiber is adapted to detect the intensity of light transmitted from the first optical fiber to determine the deflection of the horizontally displaceable mass structure.

32. The micromechanical sensor of Claim 27, wherein the shutter is coated with a reflective coating and wherein the shutter is capable of permitting light output from the first optical fiber to be transmitted to the second optical fiber and reflecting light output from the first optical fiber back to the first optical fiber, both the first and second optical fibers adapted to detect the intensity of received light to determine the horizontal deflection of the mass structure.

33. The micromechanical sensor of Claim 32, wherein a top edge of the shutter is coincident with the center of each of the oppositely opposed end faces of the first and second optical fibers when in a quiescent state, whereby the shutter reflects half of the light output from the first optical fiber.

34. The micromechanical sensor of Claim 32, wherein both the first and second optical fibers are capable of measuring, based upon the deflection of the mass structure, one of the parameters selected from the group consisting of: acceleration, force, and displacement.

35. The micromechanical sensor of Claim 27 further comprising a third groove in the upper surface of the frame and a third optical fiber secured in the third groove, wherein the third groove is positioned perpendicular to the axially aligned first and second grooves and wherein an end face of the third optical fiber is adjacent to the oppositely disposed end faces of the first and second optical fibers.

36. The micromechanical sensor of Claim 35, wherein the shutter is coated with a reflective coating and includes an angled face such that the angled face of the shutter is capable of reflecting a portion of the light that propagates outwardly from the end face of the first optical fiber to the third optical fiber while simultaneously transmitting a portion of the light to the second optical fiber and reflecting a portion of the light back to the first optical fiber, both the second and third optical fibers adapted to detect the intensity of received light to determine deflection of the mass structure.

37. The micromechanical sensor of Claim 36, wherein a top edge of the shutter is coincident with the center of each of the oppositely opposed end faces of the first and second optical fibers when in a quiescent state, whereby the shutter transmits half of the light output from the first optical fiber to the second optical fiber.

38. The micromechanical sensor of Claim 20 further comprising:
(a) a second groove in the upper surface of the frame and a second optical fiber secured in the second groove, wherein the first and second grooves and optical fibers are in axial alignment and the shutter is horizontally displaceable between oppositely disposed end faces of the first and second optical fibers;
(b) a second shutter extending from another free end of the mass structure, the second shutter oppositely disposed from the first shutter;
(c) a third groove in the upper surface of the frame and a third optical fiber secured in the third groove; and
(d) a fourth groove in the upper surface of the frame and a fourth optical fiber secured in the fourth groove, wherein the third and fourth grooves and optical fibers are in axial alignment and the second shutter is horizontally displaceable between oppositely disposed end faces of the third and fourth optical fibers.

39. The micromechanical sensor of Claim 38, wherein the first and third optical fibers are input optical fibers and the second and fourth optical fibers are output optical fibers and wherein the first and second shutters are capable of permitting a portion of the light output from the input optical fibers to be transmitted to the output optical fibers and blocking the other portion of the light output from the input optical fibers, the output optical fibers adapted to differentially measure the intensity of received light to determine deflection of the mass structure.

40. The micromechanical sensor of Claim 38, wherein the second and fourth optical fibers are adapted to detect the intensity of light transmitted from the first and third optical fibers to determine the deflection of the horizontally displaceable mass structure.

41. The micromechanical sensor of Claim 38, wherein the frame, the mass structure, the first and second shutters, the first, second, third and fourth optical grooves, and the at least one support beam on each of opposing sides of the mass structure are micromachined into the base component.

42. A micromechanical sensor comprising:
a base component integrally forming:
a frame;
a movable mass structure attached to the frame;
at least one support beam for attaching the movable mass structure to the frame;
a shutter extending from a free end of the mass structure;
a first groove for receiving an input optical fiber and a second groove for receiving an output optical fiber, the first and second grooves in an upper surface of the frame and in axial alignment; and
an input optical fiber secured within the first groove and an output optical fiber secured within the second groove; wherein the shutter at the free end of the movable mass structure is positioned and displaceable between opposing end faces of the axially aligned optical fibers and wherein the shutter is capable of influencing light output from the input optical fiber when the movable mass structure and shutter are displaced.

43. The micromechanical sensor of Claim 42, wherein the output optical fiber is adapted to detect the intensity of light transmitted from the input optical fiber to determine the deflection of the displaceable mass structure.

44. The micromechanical sensor of Claim 43, wherein the output optical fiber is capable of measuring, based upon the deflection of the mass structure, one of the parameters selected from the group consisting of: acceleration, force, and displacement.

45. The micromechanical sensor of Claim 42, wherein the shutter is capable of permitting a portion of the light output from the input optical fiber to be transmitted to the output optical fiber and blocking the other portion of the light output from the input optical fiber, the output optical fiber adapted to detect the intensity of received light to determine deflection of the mass structure.

46. The micromechanical sensor of Claim 45, wherein the shutter, when in a quiescent state, blocks half of the light output from the input optical fiber and permits half of the light to be received by the output optical fiber.

47. The micromechanical sensor of Claim 46, wherein the at least one support beam attaches an end opposing the free end of the mass structure to the frame whereby the mass structure is capable of being vertically displaced relative to the frame.

48. The micromechanical sensor of Claim 46, wherein the mass structure is attached to the frame by at least one support beam on each of opposing sides of the mass structure whereby the mass structure is capable of being horizontally displaced between opposing end faces of the axially aligned input and output optical fibers, the at least one support beam on each of opposing sides of the mass structure being integrally formed in the base component.

49. The micromechanical sensor of Claim 42, wherein the shutter is coated with a reflective coating and wherein the shutter is capable of permitting light output from the input optical fiber to be transmitted to the output optical fiber and reflecting light output from the input optical fiber back to the input optical fiber, both the input and output optical fibers adapted to detect the intensity of received light to determine deflection of the mass structure.

50. The micromechanical sensor of Claim 49, wherein a top edge of the shutter is coincident with the center of each of the oppositely opposed end faces of the input and output optical fibers when in a quiescent state, whereby the shutter reflects half of the light output from the input optical fiber.

51. The micromechanical sensor of Claim 50, wherein the at least one support beam attaches an end opposing the free end of the mass structure to the frame whereby the mass structure is capable of being vertically displaced relative to the frame.

52. The micromechanical sensor of Claim 50, wherein the mass structure is attached to the frame by at least one support beam on each of opposing sides of the mass structure whereby the mass structure is capable of being horizontally displaced between opposing end faces of the axially aligned input and output optical fibers, the at least one support beam on each of opposing sides of the mass structure being integrally formed in the base component.

53. The micromechanical sensor of Claim 42, wherein the frame, mass structure, shutter, first and second grooves, and at least one support beam are micromachined into the base component.

54. The micromechanical sensor of Claim 42, wherein the shutter extending from the mass structure is a vertically extending shutter.

55. The micromechanical sensor of Claim 54, wherein the shutter is positioned perpendicular to the longitudinal axis of the optical fiber.
